# FASCICULE DE BREVET EUROPEEN

(11) **EP 3 023 511 B1**
(45) Date de publication et mention de la délivrance du brevet: **28.07.2021**
(21) Numéro de dépôt: 14194526.1
(22) Date de dépôt: 24.11.2014
(51) Int. Cl.: C23C 4/04, F01D 5/28, F01D 11/12

(54) **Composition et joint abradable de carter de compresseur de turbomachine axiale**
Zusammensetzung und Abriebdichtung eines Kompressorgehäuses einer axialen Turbomaschine
Composition and abradable seal of an axial turbomachine compressor housing

(43) Date de publication de la demande: 25.05.2016
(73) Titulaire: Safran Aero Boosters SA, 4041 Herstal (BE)
(72) Inventeur: Schuster, Laurent, 6997 Erezee (BE)
(74) Mandataire: Lecomte & Partners

(56) Documents cités:
- EP-A1- 1 428 600
- EP-A1- 2 418 387
- EP-A2- 1 010 861
- US-A- 4 372 213

## Description

### Domaine technique

L'invention a trait au domaine des joints en matériau abradable de turbomachine axiale. Plus précisément, l'invention aborde le sujet des joints en matériau abradable à base aluminium pour compresseur de turbomachine axiale pour aéronef.

### Technique antérieure

Un matériau abradable est connu pour assurer une étanchéité dynamique dans une turbomachine, en particulier dans un compresseur de la turbomachine axiale. Un tel matériau est appliqué en une couche sur un carter externe et est apte à s'effriter en cas de contact avec des extrémités d'aubes rotoriques sans les endommager. L'intégrité mécanique est préservée malgré des vitesses de rotation supérieures à 8000 tr/minutes, et une vitesse relative entre une extrémité d'aube et son joint sensiblement égale à la vitesse du son. Un tel matériau est également employé pour assurer une étanchéité sous des viroles internes, ou sur un palier d'arbre de transmission.

De la sorte, il est possible de concevoir un compresseur tout en réduisant le jeu de fonctionnement entre les extrémités d'aubes rotoriques et la surface interne du carter. L'optimisation peut également prendre en compte la dilatation, la force centrifuge ; et certains aléas de fonctionnement comme les ingestions et les phénomènes de pompage. Un matériau abradable formant un revêtement de carter comprend généralement de l'aluminium, de la silice, du polyester.

Le document EP 1 010 861 A2 divulgue une composition d'une couche de matériau abradable pour compresseur de turbomachine axiale. La composition comprend un mélange de poudre aluminium et de poudre de silice, l'aluminium étant majoritaire. En complément, la poudre présente une poudre polymère avec du méthacrylate de méthyl. Cette composition est appliquée par projection plasma sur une paroi de compresseur de turbomachine axiale, la paroi recevant au préalable une couche de liaison avec une majorité de nickel, et de l'aluminium en moindre proportion. Cette composition permet de réaliser un joint abradable avec un impératif de tenue à la corrosion, toutefois cette résistance à la corrosion mérite encore d'être améliorée pour optimiser la résistance et le rendement de la turbomachine.

Le document EP 1 428 600 A1 divulgue un joint abradable de turbomachine. La composition de ce joint abradable inclut du métal et une charge organique. Le métal comporte majoritairement de l'aluminium et un ou plusieurs des éléments additionnels suivant : chrome, molybdène, nickel, silicium, et fer. L'ensemble des éléments additionnels représente au plus 10% massique du poids de la poudre métallique.

Le document EP 2 418 387 A1 divulgue un joint abradable fixé à un carter composite par l'intermédiaire d'un feuillard perforé. Le joint abradable est adapté à un compresseur basse pression de turboréacteur. Il est du type Al-Si-Polyester.

### Résumé de l'invention

### Problème technique

L'invention a pour objectif de résoudre au moins un des problèmes posés par l'art antérieur. Plus précisément, l'invention a pour objectif d'améliorer la résistance à la corrosion d'un joint en matériau abradable de turbomachine axiale. L'invention a également pour objectif d'optimiser à la fois la durabilité de l'abradable, le caractère friable de l'abradable et l'étanchéité assurée par l'abradable.

### Solution technique

L'invention a trait à une composition pour revêtement abradable de joint d'étanchéité de turbomachine axiale selon la revendication indépendante 1 et à un joint d'étanchéité de turbomachine axiale selon la revendication indépendante 4.

L'invention a également trait à un procédé de réalisation d'un joint d'étanchéité abradable selon la revendication indépendante 11 et sa renvendication dépendante 12 annexée.

On aura bien compris que l'invention a pour objet un joint d'étanchéité de turbomachine axiale, notamment de compresseur de turbomachine axiale, éventuellement basse pression ; le joint comprenant : un support arrondi ; au moins un revêtement en matériau abradable avec une phase métallique comportant principalement ou majoritairement de l'aluminium, notamment de la poudre d'aluminium ; la phase métallique comprenant en outre du nickel, notamment de la poudre de nickel ; le revêtement abradable étant appliqué sur le support arrondi, et étant destiné à coopérer par abrasion avec un élément rotorique de la turbomachine axiale.

L'invention a également pour objet une composition pour revêtement abradable de joint d'étanchéité de turbomachine axiale, notamment pour application sur un support arrondi par projection plasma, la composition comprenant : du métal, notamment une poudre métallique, avec principalement de l'aluminium ; une charge, organique ou minérale, notamment en poudre; remarquable en ce que le métal comprend en outre du nickel, notamment de la poudre de nickel.

Le métal comprend, en masse, entre 20% et 45%, préférentiellement entre 35% et 45% de nickel, notamment de poudre de nickel.

Le métal comprend, en masse, entre 55% et 80% d'aluminium, notamment de poudre d'aluminium.

La composition comprend, en masse, entre 5% et 50% de charge, préférentiellement entre 15% et 25% de charge, éventuellement la charge est un polymère tel du polyester ou du méthacrylate de méthyle ; ou du nitrure de bore hexagonal ; ou du fluorure de calcium ; éventuellement en poudre(s).

Selon un mode avantageux de l'invention, le cumul de l'aluminium et du nickel représente plus de 80% de la masse du métal de la composition, préférentiellement plus de 90%, plus préférentiellement plus de 95%.

L'invention a également pour objet un joint d'étanchéité de turbomachine axiale, notamment de compresseur de turbomachine axiale, le joint comprenant : un support arrondi ; au moins un revêtement en matériau abradable recouvrant le support arrondi, et qui est destiné à coopérer par abrasion avec un élément rotorique de la turbomachine axiale ; remarquable en ce que la composition du revêtement abradable est conforme à l'invention.

Selon l'invention, dans le revêtement abradable le métal forme une matrice qui est associée à la charge ; éventuellement, dans le revêtement abradable le volume occupé par la matrice métallique est majoritaire.

Selon un mode avantageux de l'invention, le support arrondi est une virole externe, le revêtement abradable étant à l'intérieur de la virole externe ; ou le support arrondi est un carter externe, le revêtement abradable étant disposé à l'intérieur du carter externe.

Selon un mode avantageux de l'invention, le support est réalisé en un matériau composite à matrice organique et avec des fibres de carbone et/ou des fibres de verre, lesdites fibres étant agencées en un empilement de plis fibreux éventuellement tissés.

Selon un mode avantageux de l'invention, le support comprend des moyens de fixation, tels des orifices et/ou au moins une patte de fixation annulaire, lesdits moyens étant disposés en amont et/ou en aval du revêtement abradable.

Selon un mode avantageux de l'invention, le support présente une gorge annulaire avec un bord amont et un bord aval, le revêtement abradable recouvrant la gorge annulaire du bord amont au bord aval.

Selon un mode avantageux de l'invention, le revêtement abradable forme une couche d'épaisseur supérieure à 0,30 mm, préférentiellement supérieure à 2,00 mm, plus préférentiellement supérieure à 5,00 mm.

Selon un mode avantageux de l'invention, le revêtement forme une couche homogène selon son épaisseur et/ou selon son étendue principale.

Selon un mode avantageux de l'invention, le support arrondi forme un cercle ou une portion de cercle. Par portion de cercle on peut entendre une portion angulaire de cercle.

Selon un mode avantageux de l'invention, le revêtement abradable présente une compacité supérieure à 80%, préférentiellement supérieure à 95%, plus préférentiellement supérieure à 99%.

Selon un mode avantageux de l'invention, dans le métal du revêtement abradable, le volume d'aluminium est majoritaire.

Selon un mode avantageux de l'invention, le revêtement abradable forme une barrière étanche de sorte à protéger le support des attaques chimiques de la turbomachine.

Selon un mode avantageux de l'invention, le joint comprend une couche intercalaire disposée entre le support et le revêtement abradable, préférentiellement la couche intercalaire est un feuillard métallique.

L'invention a également pour objet un procédé de réalisation d'un joint d'étanchéité abradable de turbomachine axiale, notamment de compresseur de turbomachine axiale, le joint comprenant un support arrondi et un revêtement abradable appliqué sur le support, le procédé comprenant les étapes suivantes : (a) fourniture ou fabrication d'un support arrondi ; (d) application d'une composition d'abradable sur le support arrondi, la composition comprenant de la poudre métallique comportant principalement de la poudre d'aluminium ; remarquable en ce que lors de l'étape (d) application, la poudre métallique comprend en outre de la poudre de nickel, la composition est conforme à l'invention.

Selon un mode avantageux de l'invention, lors de l'étape (d) application, la composition est appliquée par projection plasma sur le support, préférentiellement la composition comprend en outre une poudre organique tel un polymère, ou une poudre minérale.

L'invention a également pour objet une turbomachine comprenant un joint d'étanchéité abradable réalisé selon un procédé, remarquable en ce que le joint abradable est conforme à l'invention, et/ou le procédé est conforme à l'invention.

Selon un mode avantageux de l'invention, la turbomachine comprend un compresseur basse pression avec au moins une rangée d'aubes rotoriques, le joint étant un joint du compresseur basse pression qui entoure la au moins une rangée d'aubes rotoriques.

Selon un mode avantageux de l'invention, la turbomachine comprend au moins une rangée annulaire d'aubes statoriques avec des plateformes fixées sur le support, le revêtement abradable étant en contact des plateformes d'aubes, préférentiellement le revêtement abradable forme une barrière étanche protégeant le support depuis, axialement, les plateformes. Un tel joint assure une double étanchéité ; à savoir une étanchéité dynamique et une étanchéité statique.

Selon un mode avantageux de l'invention, le support est une virole interne reliée aux extrémités internes d'une rangée d'aubes statoriques, le revêtement abradable étant appliqué à l'intérieur de la virole interne.

Selon un mode avantageux de l'invention, le compresseur comprend des éléments chauffants aptes à réchauffer le revêtement de matériau abradable, et/ou le compresseur comprend des orifices de prélèvement de flux.

Selon un mode avantageux de l'invention, la surface interne du joint abradable guide un flux annulaire, généralement axial, de la turbomachine.

De manière générale, les modes avantageux de chaque objet de l'invention sont également applicables aux autres objets de l'invention.

### Avantages apportés

Le comportement offert par l'invention limite les relargages de la charge, tel de polymère, dans la turbomachine pour ne pas y perturber la combustion. Le relargage de particules obstruant les conduits et les mécanismes, ou abrasant ces derniers est restreint. Ces avantages s'inscrivent dans un contexte d'amélioration de la sécurité.

L'invention est particulièrement pertinente dans le contexte d'un compresseur basse pression puisque l'air qui y entre peut être à -50°C, et à +170°C en sortie de compresseur. La composition proposée s'adapte tant aux basses températures qu'aux températures intermédiaires, aux variations de température du flux primaire en fonction des phases de vols d'un aéronef sur une plage de plus de 200°C. L'invention permet en outre de préserver la résistance thermique de l'abradable.

La composition Al-Ni-Polyester offre une certaine résistance à la corrosion, en particulier face à un brouillard salin tel que l'ont prouvé des essais. La résistance peut s'observer sur une large plage de températures, par exemple de -50°C, à plus de 150°C. Cette résistance respecte également l'étanchéité dans le temps sans dégrader prématurément les aubes rotoriques. Ces avantages espacent les entretiens de la turbomachine ce qui permet d'effectuer une économie substantielle.

### Brève description des dessins

La figure 1 représente une turbomachine axiale selon l'invention.
La figure 2 est un schéma d'un compresseur de turbomachine selon l'invention.
La figure 3 esquisse un joint abradable de tubomachine selon l'invention.
La figure 4 illustre un diagramme d'un procédé de réalisation d'un joint d'étanchéité abradable de turbomachine selon l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine.

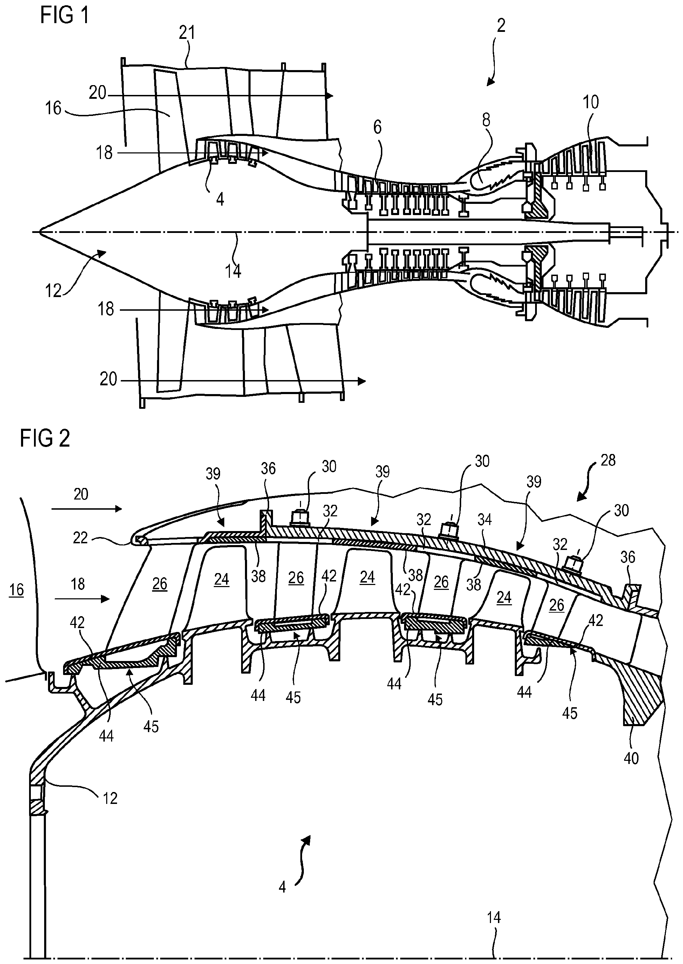

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés à la soufflante 16 ou à une rangée d'aubes rotoriques 24 pour redresser le flux d'air, de sorte à convertir la vitesse du flux en pression statique. Les aubes statoriques 26 s'étendent essentiellement radialement depuis un carter externe 28 du compresseur, et peuvent y être fixées à l'aide d'un axe 30 prolongeant radialement les plateformes 32 d'aubes statoriques 26.

Le carter externe 28 peut comprendre une paroi annulaire 34 et des brides annulaires 36 de fixation délimitant axialement la paroi 34. Le carter externe 28 peut être formé de deux demi-coquilles. La paroi 34 forme une manche et présente une forme en ogive, son profil de révolution est courbe et s'étend principalement axialement ; son rayon varie. La paroi 34 sert de support de fixation aux plateformes de fixation 32 des aubes statoriques 26, et de support pour l'application de revêtements de matériaux abradables 38 assurant des étanchéités dynamiques ; de sorte à former des joints d'étanchéité abradables 39 autour des aubes rotoriques 24. Les revêtements abradables 38 forment des couches annulaires homogènes, telles des rubans circulaires dont les épaisseurs sont supérieures à 2,00 mm. Une étanchéité dynamique s'étend comme une limitation de l'écoulement entre l'abradable et une aube rotorique tournant lors du fonctionnement de la turbomachine.

Les brides annulaires de fixation 36 s'étendent radialement vers l'extérieur. Les brides annulaires 36 amont et aval du carter 28 permettent de fixer le compresseur 4 au carter intermédiaire 40 de soufflante, mais aussi pour la fixation du bec de séparation 22. Les brides de fixation 36 peuvent comprendre des orifices de fixation axiaux (non représentés), et des portées tubulaires. Les revêtements abradables 38 peuvent être disposés axialement entres les brides annulaires de fixation 36.

Le carter 28, notamment sa paroi 34, peut être réalisée en un matériau composite à matrice organique. Le matériau composite peut comprendre une résine époxy et une préforme avec un empilement de plis fibreux de carbone tissés de manière tridimensionnelle. Alternativement, le carter peut être réalisé en métal, tel un alliage de titane ou d'aluminium. Suivant une alternative de l'invention, le carter peut être formé de plusieurs viroles externes, rapportées et fixées axialement les unes aux autres ; par exemple grâce à des brides annulaires radiales.

Les rangées d'aubes statoriques 26 peuvent supporter des viroles internes 42 liées aux extrémités internes des aubes statoriques 26. Les surfaces internes des viroles internes 42 peuvent supporter des couches de matériaux abradables 44 de sorte à former des joints 45 autour des lamelles annulaires du rotor 12, ou léchettes, pour lutter contre les recirculations sous les viroles internes 42.

Par revêtement on peut entendre la peau de la structure du joint (39 ; 45), sur laquelle s'effectue l'écoulement de l'air et qui subit les forces aérodynamiques. Le revêtement peut former la surface externe ou interne du joint (39 ; 45).

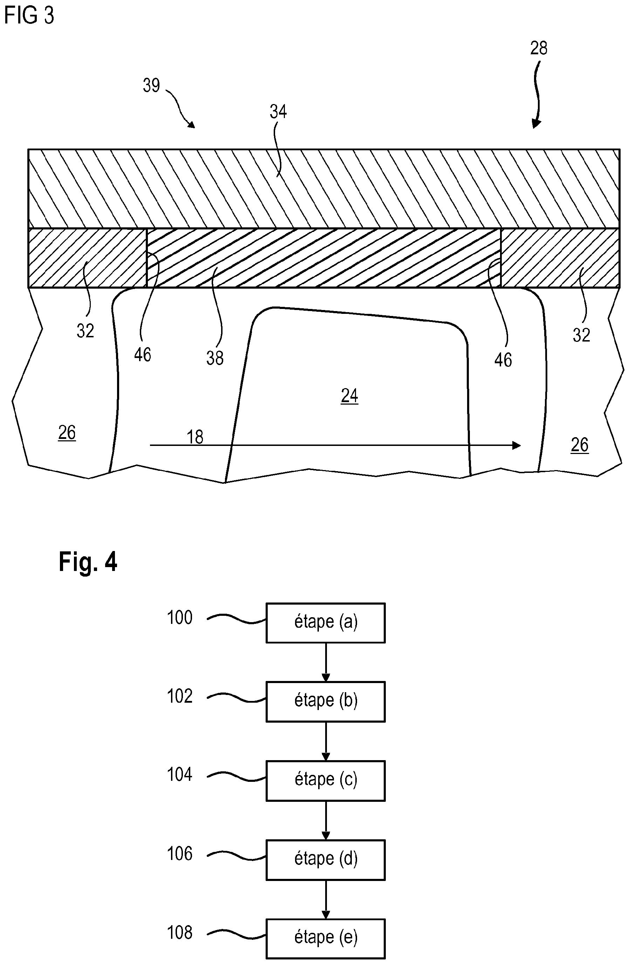

La figure 3 représente un joint d'étanchéité abradable 39 de compresseur tel que celui de la figure 2. Y est représenté une paroi 34 de carter 28, ou support 28, un revêtement abradable 38 qui y est appliqué, et une extrémité d'aube rotorique 24 entre deux aubes statoriques 26.

Le revêtement abradable 38 s'étend d'une plateforme 32 d'aube 26 à l'autre, qui appartient à une rangée voisine disposée en amont ou en aval. Le revêtement abradable 38 affleure les surfaces internes des plateformes 32. Les plateformes 32 d'aubes statoriques 26 forment des épaulements circulaires 46 délimitant axialement les revêtements abradables 38. Alternativement, la paroi présente des gorges annulaires radiales formées dans son épaisseur, qui sont comblées par les revêtements abradables, sur toutes leurs profondeurs. Les revêtements abradables recouvrent toute la surface interne de la paroi entre les plateformes des aubes statoriques. La combinaison des plateformes 32 et des revêtements abradables 38 forme une barrière généralement étanche tout le long du carter 28, ou du moins de la paroi 34; éventuellement à l'exception de rainures entre les plateformes 32 d'une même rangée annulaire.

Le revêtement abradable 38 peut être appliqué à même son support 34. Ou encore, le joint 39 peut comprendre une couche intercalaire entre le support et le revêtement abradable. La couche intercalaire peut être un feuillard, telle une tôle d'acier, ou une tôle de nickel. Le feuillard peut être perforé et/ou découpé.

Le revêtement abradable 38 présente une surface interne en contact du flux primaire 18. Sa surface guide et délimite le flux primaire 18 au cours de sa compression. Le revêtement abradable 38 peut comprendre au moins deux phases mélangées, à savoir une phase métallique et éventuellement une phase de la charge, telle une phase minérale et ou une charge organique, de sorte à former un composite. Les matériaux du revêtement abradable peuvent être granuleux, ou certains peuvent être granuleux et un autre peut y combler les espaces entre les grains.

La phase métallique du revêtement abradable 38 comprend principalement de l'aluminium. La phase métallique du revêtement est à base aluminium. C'est-à-dire que parmi les métaux de l'abradable, celui dont la masse est la plus importante est l'aluminium. La prépondérance de l'aluminium optimise la masse du joint 39. La phase métallique du revêtement abradable 38 comprend également du nickel, en proportion massique inférieure à celle de l'aluminium. La phase métallique comprendre entre 20% et 45% de nickel ; et entre 55% et 80% d'aluminium. En plus, la phase métallique peut éventuellement comprendre du fer, du cuivre, du zinc, du manganèse, du magnésium, des impuretés ; ces composants représentant chacun entre de 1% et 0,1% de la masse de la phase métallique.

La charge du revêtement abradable 38 peut comprendre du polymère, tel que du polyester ou du méthacrylate de méthyle. La charge peut également comprendre du nitrure de bore hexagonal ou du fluorure de calcium. La masse de la charge représente entre 5% et 50%, préférentiellement entre 15% et 25%, éventuellement 20% de la masse du revêtement 38. La phase métallique peut représenter la majorité du volume du revêtement abradable, ainsi, la phase métallique peut y former une matrice recevant la charge ou additif. Eventuellement, le revêtement abradable peut être formé de grains de poudres métalliques dont les espaces inter-grains sont comblés par la charge. L'espace vide dans le revêtement abradable est inférieur à 1%, préférentiellement inférieur à 0,1%.

La figure 4 représente un diagramme d'un procédé de réalisation d'un joint d'étanchéité abradable de turbomachine axiale tel que présenté en figure 3. Le joint peut être employé sur un compresseur, notamment basse pression.

Le procédé comprend les étapes suivantes, éventuellement réalisées dans l'ordre suivant :
(a)- fourniture 100 d'un support arrondi, tel un carter externe de compresseur,
(b)- fourniture 102 d'aubes statoriques avec des plateformes ;
(c)- fixation 104 des aubes via leurs plateformes sur le support arrondi en formant des rangées annulaires ;
(d)- application 106 d'une composition d'abradable sur le support arrondi entre les rangées annulaires de plateformes de sorte à recouvrir le support entre les rangées de plateformes d'aubes ;
(e)- montage 108 du support autour d'un rotor de la tubomachine, par exemple une rangée annulaire d'aubes rotoriques.

Au début de l'étape (d) application 106, la composition présente une phase métallique avec principalement de l'aluminium, par exemple sous forme de poudre. La phase métallique peut également comprendre du nickel et une charge ; tous deux en poudres. La composition de la poudre peut correspondre à la composition chimique du revêtement abradable présenté ci-dessus. A l'issue de l'étape (d) application 106, au moins un ou chaque composé de la composition reste sous forme de poudre, ou au moins un des composés a fondu, ou chaque composé a fondu.

Eventuellement, certains ou chaque type de grains sont essentiellement pleins, leurs vides propres représentent moins de 5% de leur matière, préférentiellement moins de 1%, plus préférentiellement moins de 0,20%. Chaque grain peut présenter un matériau homogène. Optionnellement, un type de grain est creux, par exemple les grains d'aluminium ou de nickel.

Lors de l'étape (d) application 106, la composition peut être appliquée sur le support par projection plasma. Une telle technique est bien connue de l'homme du métier, elle peut être effectuée de manière similaire à celle divulguée dans le document EP 1 010 861 A2. La poudre de la charge peut être introduite dans le jet du plasma en aval des poudres métalliques. D'autres techniques sont envisageables. Alternativement, la composition peut être appliquée sur le support par frittage, éventuellement avec un chauffage prolongé. Dans cette alternative, certains grains peuvent garder leurs formes initiales.

Les étapes : (b) fourniture 102 d'aubes statoriques ; (c) fixation 104 des aubes ; (e) montage 108 du support ; sont entièrement optionnelles selon l'invention. En effet, la composition d'abradable peut être appliquée sur un support libre d'aubes et leurs plateformes. Dans ce cas, l'étape (d) application 106 peut s'effectuer dans une gorge formée dans l'épaisseur d'une virole.

## Revendications

1. Composition pour revêtement abradable (38 ; 44) de joint d'étanchéité (39 ; 45) de turbomachine axiale (2), notamment pour application sur un support arrondi (34, 42) par projection plasma, la composition comprenant :
- du métal, notamment une poudre métallique, avec principalement de l'aluminium ;
- une charge, organique ou minérale, notamment en poudre, la charge représentant 5 à 50% de la masse de la composition ;
**caractérisée en ce que**
le métal comprend en outre en masse entre 20% et 45% de nickel, notamment de la poudre de nickel et le métal comprend, en masse, entre 55% et 80% d'aluminium, notamment de poudre d'aluminium.

2. Composition selon la revendication 1, **caractérisée en ce que** le métal comprend, en masse, entre 35% et 45% de nickel, notamment de poudre de nickel.

3. Composition selon l'une des revendications 1 ou 2, **caractérisée en ce que** la charge est un polymère tel du polyester ou du méthacrylate de méthyle ; ou du nitrure de bore hexagonal ; ou du fluorure de calcium ; éventuellement en poudre(s).

4. Joint d'étanchéité (39 ; 45) de turbomachine axiale (2), notamment de compresseur (4 ; 6) de turbomachine axiale (2), le joint (39 ; 45) comprenant :
- un support arrondi (34 ; 42) ;
- au moins un revêtement en matériau abradable (38 ; 44) recouvrant le support arrondi (34 ; 42), et qui est destiné à coopérer par abrasion avec un élément rotorique (24) de la turbomachine axiale (2) ;
la composition du revêtement abradable (38 ; 44) comprenant :
- du métal, avec principalement de l'aluminium, formant une matrice métallique qui est associée à une charge organique ou minérale;
**caractérisé en ce que**
le métal comprend en outre en masse entre 20% et 45% de nickel et la composition comprend, en masse, entre 5% et 50% de charge.

5. Joint selon la revendication 4, **caractérisé en ce que** la composition comprend entre 55 et 80% d'aluminium et/ou entre 35% et 45% de nickel ; et/ou la charge étant éventuellement un polymère tel du polyester ou du méthacrylate de méthyle ; ou du nitrure de bore hexagonal ; ou du fluorure de calcium.

6. Joint (39 ; 45) selon la revendication 4 ou 5, **caractérisé en ce que** dans le revêtement abradable le volume occupé par la matrice métallique est majoritaire.

7. Joint (39 ; 45) selon l'une des revendications 4 à 6, **caractérisé en ce que** le support arrondi est une virole externe, le revêtement abradable étant à l'intérieur de la virole externe ; ou le support arrondi est un carter externe (28), le revêtement abradable (38) étant disposé à l'intérieur du carter externe (28).

8. Joint (39 ; 45) selon l'une des revendications 4 à 7, **caractérisé en ce que** le support (34 ; 42) est réalisé en un matériau composite à matrice organique et avec des fibres de carbone et/ou des fibres de verre, lesdites fibres étant agencées en un empilement de plis fibreux éventuellement tissés.

9. Joint (39 ; 45) selon l'une des revendications 4 à 8, **caractérisé en ce que** le support (34 ; 42) comprend des moyens de fixation (36), tels des orifices et/ou au moins une patte de fixation annulaire, lesdits moyens (36) étant disposés en amont et/ou en aval du revêtement abradable (38 ; 44).

10. Joint (39 ; 45) selon l'une des revendications 4 à 9, **caractérisé en ce que** le support (34 ; 42) présente une gorge annulaire avec un bord amont et un bord aval, le revêtement abradable (38 ; 44) recouvrant la gorge annulaire du bord amont au bord aval.

11. Procédé de réalisation d'un joint d'étanchéité abradable (39 ; 45) de turbomachine axiale (2), notamment de compresseur (4 ; 6) de turbomachine axiale (2), le joint (39 ; 45) comprenant un support arrondi (34 ; 42) et un revêtement abradable (38 ; 44) appliqué sur le support, le procédé comprenant les étapes suivantes :
(a)- fourniture ou fabrication (100) d'un support arrondi (34 ; 42),
(d)- application (106) d'une composition d'abradable sur le support arrondi (34 ; 42), la composition étant conforme à l'une des revendications 1 à 3.

12. Procédé selon la revendication 11, **caractérisé en ce que** lors de l'étape (d) application, la composition est appliquée par projection plasma sur le support (34 ; 42), préférentiellement la composition comprend en outre une poudre organique tel un polymère, ou une poudre minérale.

13. Turbomachine (2) comprenant un joint d'étanchéité abradable (39 ; 45) réalisé selon un procédé, **caractérisée en ce que** le joint abradable (39 ; 45) est selon l'une des revendications 4 à 10, et/ou le procédé est selon l'une des revendications 11 à 12.

14. Turbomachine (2) selon la revendication 13, **caractérisée en ce qu'**elle comprend un compresseur basse pression (4) avec au moins une rangée d'aubes rotoriques (24), le joint étant un joint (39) du compresseur basse pression (4) qui entoure la au moins une rangée d'aubes rotoriques (24).

15. Turbomachine (2) selon l'une des revendications 13 à 14, **caractérisée en ce qu'**elle comprend au moins une rangée annulaire d'aubes statoriques (26) avec des plateformes (32) fixées sur le support (34 ; 42), le revêtement abradable étant en contact des plateformes (32) d'aubes (26), préférentiellement le revêtement abradable forme une barrière étanche protégeant le support (34 ; 42) depuis, axialement, les plateformes (32).

## Patentansprüche

1. Zusammensetzung für eine abreibbare Beschichtung (38; 44) einer Dichtungsfuge (39; 45) einer Axialturbomaschine (2), insbesondere zum Aufbringen durch Plasmaspritzen auf einen abgerundeten Träger (34, 42), wobei die Zusammensetzung umfasst:
- Metall, insbesondere ein metallisches Pulver, hauptsächlich mit Aluminium;
- einen Füllstoff, organisch oder anorganisch, insbesondere in Pulverform, wobei der Füllstoff 5 bis 50 % der Masse der Zusammensetzung darstellt;
**dadurch gekennzeichnet, dass** das Metall ferner zwischen 20 Masse-% und 45 Masse-% Nickel, insbesondere Nickelpulver umfasst, und das Metall zwischen 55 Masse-% und 80 Masse-% Aluminium, insbesondere Aluminiumpulver umfasst.

2. Zusammensetzung nach Anspruch 1, **dadurch gekennzeichnet, dass** das Metall zwischen 35 Masse-% und 45 Masse-% Nickel, insbesondere Nickelpulver umfasst.

3. Zusammensetzung nach einem der Ansprüche 1 oder 2, **dadurch gekennzeichnet, dass** der Füllstoff ein Polymer wie Polyester oder Methylmethacrylat ist; oder hexagonales Bornitrid; oder Calciumfluorid; wahlweise in Pulver(n).

4. Dichtungsfuge (39; 45) der Axialturbomaschine (2), insbesondere von einem Verdichter (4; 6) einer Axialturbomaschine (2), wobei die Dichtung (39; 45) umfasst:
- einen abgerundeten Träger (34; 42);
- mindestens eine Beschichtung aus abreibbarem Material (38; 44), die den abgerundeten Träger (34; 42) bedeckt und dazu bestimmt ist, durch Abrieb mit einem Rotorelement (24) der Axialturbomaschine (2) zusammenzuwirken; wobei die Zusammensetzung der abreibbaren Beschichtung (38, 44) Folgendes umfasst:
- Metall, hauptsächlich mit Aluminium, eine metallische Matrix bildend, die mit einem organischen oder anorganischen Füllstoff verbunden ist;
**dadurch gekennzeichnet, dass** das Metall ferner zwischen 20 Masse-% und 45 Masse-% Nickel umfasst und die Zusammensetzung zwischen 5 Masse-% und 50 Masse-% Füllstoff umfasst.

5. Fuge nach Anspruch 4, **dadurch gekennzeichnet, dass** die Zusammensetzung zwischen 55 und 80 % Aluminium und / oder zwischen 35 % und 45% Nickel umfasst; und / oder der Füllstoff optional ein Polymer wie Polyester oder Methylmethacrylat oder hexagonales Bornitrid oder Calciumfluorid ist.

6. Fuge (39; 45) nach Anspruch 4 oder 5, **dadurch gekennzeichnet, dass** in der abreibbaren Beschichtung das von der Metallmatrix eingenommene Volumen überwiegt.

7. Fuge (39; 45) nach einem der Ansprüche 4 bis 6, **dadurch gekennzeichnet, dass** der abgerundete Träger ein Außenmantel ist, wobei die abreibbare Beschichtung sich in dem Außenmantel befindet oder der abgerundete Träger ein Außengehäuse (28) ist, wobei die abreibbare Beschichtung (38) im Inneren des Außengehäuses (28) angeordnet ist.

8. Fuge (39; 45) nach einem der Ansprüche 4 bis 7, **dadurch gekennzeichnet, dass** der Träger (34; 42) aus einem Verbundmaterial mit organischer Matrix und mit Kohlefasern und / oder Glasfasern besteht, wobei die Fasern in einem Stapel von möglicherweise gewebten Faserlagen angeordnet sind.

9. Fuge (39; 45) nach einem der Ansprüche 4 bis 8, **dadurch gekennzeichnet, dass** der Träger (34; 42) Befestigungsmittel (36) wie Öffnungen und / oder mindestens eine ringförmige Befestigungslasche umfasst, wobei die Mittel (36) stromaufwärts und / oder stromabwärts der abreibbaren Beschichtung (38; 44) angeordnet sind.

10. Fuge (39; 45) nach einem der Ansprüche 4 bis 9, **dadurch gekennzeichnet, dass** der Träger (34; 42) eine ringförmige Nut mit einer stromaufwärtigen Kante und einer Kante Stromabwärts darstellt, wobei die abreibbare Beschichtung (38; 44) die ringförmige Nut von der stromaufwärtigen Kante zur stromabwärtigen Kante bedeckt.

11. Verfahren zur Herstellung einer abreibbaren Dichtungsfuge (39; 45) einer axialen Turbomaschine (2), insbesondere eines Verdichters (4; 6) einer axialen Turbomaschine (2), wobei die Dichtung (39; 45) einen abgerundeten Träger (34; 42) und eine abreibbare Beschichtung (38; 44) umfasst, die auf den Träger aufgetragen ist, wobei das Verfahren die folgenden Schritte umfasst:
(a)- Lieferung oder Herstellung (100) eines abgerundeten Trägers (34; 42),
(d)- Auftragen (106) einer abreibbaren Zusammensetzung auf den abgerundeten Träger (34; 42), wobei die Zusammensetzung einem der Ansprüche 1 bis 3 entspricht.

12. Verfahren nach Anspruch 11, **dadurch gekennzeichnet, dass** während des Auftragens (d) die Zusammensetzung durch Plasmaspritzen auf den Träger (34; 42) aufgetragen wird, wobei die Zusammensetzung vorzugsweise ferner ein organisches Pulver, wie ein Polymer, oder ein anorganisches Pulver umfasst.

13. Turbomaschine (2) umfassend eine nach einem Verfahren hergestellte abreibbare Dichtung (39; 45), **dadurch gekennzeichnet, dass** die abreibbare Dichtung (39; 45) eine nach einem der Ansprüche 4 bis 10 ist und / oder das Verfahren nach einem der Ansprüche 11 bis 12 ist.

14. Turbomaschine (2) nach Anspruch 13, **dadurch gekennzeichnet, dass** sie einen Niederdruckverdichter (4) mit mindestens einer Laufschaufelreihe (24) umfasst, wobei die Dichtung eine Dichtung (39) des Niederdruckverdichters (4) ist, die die mindestens eine Laufschaufelreihe umgibt (24).

15. Turbomaschine (2) nach einem der Ansprüche 13 bis 14, **dadurch gekennzeichnet, dass** sie mindestens eine ringförmige Reihe von Statorschaufeln (26) mit auf dem Träger (34; 42) befestigten Plattformen (32) umfasst, wobei die abreibbare Beschichtung in Kontakt mit den Plattformen (32) der Schaufeln (26) steht, wobei vorzugsweise die abreibbare Beschichtung eine dichte Barriere bildet, die den Träger (34; 42) axial vor den Plattformen (32) schützt.

## Claims

1. Composition for an abradable coating (38; 44) of a seal (39; 45) of an axial-flow turbomachine (2), preferably being intended to be applied to a rounded support (34, 42) by plasma spraying, the composition including:
- a metallic material, preferably a metallic powder, with mainly aluminium;
- an organic or mineral filler, preferably made of powder, the filler constituting 5 to 50% of the weight of the composition;
**characterized in that**
the metallic material comprises additionally between 20 and 45% by weight of nickel, preferably nickel powder, and the metallic material comprises by weight between 55 and 80% of aluminium, preferably powder of aluminium.

2. Composition in accordance with claim 1, **characterized in that** the metallic material comprises, by weight, between 35% and 45% of nickel, preferably as nickel powder.

3. Composition in accordance with any of claims 1 or 2, **characterized in that** the filler is a polymer such as polyester or methyl methacrylate; or hexagonal boron nitride; or calcium fluoride; potentially as powder(s).

4. Seal (39; 45) for an axial-flow turbomachine (2), preferably of a compressor (4; 6) of an axial turbomachine (2), the seal (39; 45) comprising:
- a rounded support (34 ; 42);
- at least one coating made of abradable material (38; 44) covering the rounded support (34; 42), and intended to cooperate abrasively with a rotor element (24) of the axial turbomachine (2);
the composition of the abradable coating (38; 44) comprising:
- a metallic material, with mainly aluminium, forming a metallic matrix associated with an organic or mineral filler;
**characterized in that**
An organic or mineral filler, preferably made of powder, the filler constituting 5 to 50% of the weight of the composition;
**characterized in that**
the metallic material comprises additionally between 20 and 45% by weight of nickel, and the metallic material comprises by weight between 55 and 80% of aluminium.

5. Seal according to claim 4, **characterized in that** the composition comprises between 55 and 80% of aluminium and/or between 35% and 45% of nickel; and/or
the filler is potentially a polymer such as polyester or methyl methacrylate; or hexagonal boron nitride; or calcium fluoride.

6. Seal (39; 45) according to claim 4 or 5, **characterized in that** the volume occupied by the metallic matrix forms more than half of the abradable coating.

7. Seal (39; 45) according to any of claims 4-6, **characterized in that** the rounded support is an external shroud, the abradable coating being arranged internally to the external shroud; or the rounded support is an external casing (28), the abradable coating (38) being arranged inside the external casing (28).

8. Seal (39; 45) according to any of claims 4-7, **characterized in that** the support (34, 42) is made of a composite material with organic matrix and with carbon and/or glass fibers, said fibers being arranged as a stack of fibrous plies, potentially threaded.

9. Seal (39; 45) according to any of claims 4-8, **characterized in that** the support (34; 42) comprises fixation means (36) such as holes and/or at least one annular fixation tab, said means (36) being arranged upstream and/or downstream of the abradable coating (38; 44).

10. Seal (39; 45) according to any of claims 4-9, **characterized in that** the support (34; 42) contains an annular groove with an upstream edge and a downstream edge, the abradable coating (38; 44) covering the annular groove from the upstream edge to the downstream edge.

11. A process for producing an abradable seal (39, 45) of an axial-flow turbomachine (2), preferably of a compressor (4, 6) of the axial turbomachine (2), the seal (39, 45) comprising a rounded support (34, 42) and an abradable coating (38, 44) applied to the support (34, 42), the process comprising the following steps:
(a)- providing (100) of or manufacturing a rounded support (34, 42);
(d)- applying (106) an abradable composition to the rounded support, the composition being in accordance with any of claims 1 to 3.

12. The process in accordance with claim 11, **characterized in that** during the step (d) application, the composition is applied by plasma spraying to the support (34, 42); and preferably the composition additionally comprises an organic powder such as a polymer, or a mineral powder.

13. A turbomachine (2) comprising an abradable seal (39, 45) made according to a process, **characterized in that** the seal (39, 45) is in accordance with any of claims 4 to 10, and/or the process is according to any of claims 11 or 12.

14. Turbomachine (2) of claim 13, **characterized in that** it comprises a low-pressure compressor (4) with at least one row of rotor blades (24), the seal being a seal (39) of the low-pressure compressor (4) which surrounds the at least one row of rotor blades (24).

15. Turbomachine (2) according to claim 13 or 14, **characterized in that** it comprises at least one annular row of stator vanes (26) with platforms (32) attached to the support (34, 42), the abradable coating being in contact with the platforms (32) of vanes (26), preferably the abradable coating constitutes a sealed barrier that protects the support (34, 42) axially from the platforms (32).
